# EUROPEAN PATENT SPECIFICATION

(11) **EP 4 157 007 B1**
(45) Date of publication and mention of the grant of the patent: **10.07.2024**
(21) Application number: 21735424.0
(22) Date of filing: 26.05.2021
(51) Int. Cl.: A42B 3/04, G01M 7/08, G01P 15/08, G01P 1/16, G01P 1/12

(54) **METHOD TO EVALUATE THE ACCELERATIONS AND/OR SPEEDS UNDERGONE BY THE HEAD, AND PROTECTIVE DEVICE FOR THE HEAD**
VERFAHREN ZUR AUSWERTUNG DER BESCHLEUNIGUNGEN UND/ODER GESCHWINDIGKEITEN EINES KOPFES, UND SCHUTZVORRICHTUNG FÜR DEN KOPF
PROCÉDÉ D'ÉVALUATION DES ACCÉLÉRATIONS ET/OU DES VITESSES SUBIES PAR LA TÊTE, ET DISPOSITIF DE PROTECTION POUR LA TÊTE

(30) Priority: 26.05.2020 IT 202000012298
(43) Date of publication of application: 05.04.2023
(73) Proprietor: Universita' Degli Studi di Firenze, 50121 Firenze (IT)
(72) Inventor: BRACALI, Andrea, 50121 FIRENZE (IT); BALDANZINI, Niccolò, 50121 FIRENZE (IT); PIERINI, Marco, 50121 FIRENZE (IT); BARBANI, Daniele, 50121 FIRENZE (IT)
(74) Representative: Petraz, Gilberto Luigi
(86) International application number: PCT/IT2021/050165
(87) International publication number: WO 2021/240567

(56) References cited:
- US-A1- 2007 061 106
- US-A1- 2012 191 397
- US-A1- 2016 171 864
- US-A1- 2017 304 140
- US-B1- 9 936 756

## Description

### FIELD OF APPLICATION

The present invention relates to a method to evaluate the accelerations and/or speeds undergone by the head, as well as to a protective device wearable on a head. In particular, the invention relates to a method to calculate the linear and rotational accelerations acting on the head in the event of an impact. The invention also relates to a protective device for the head, configured to perform the aforementioned method.

### BACKGROUND ART

Traumatic brain injuries are among the most frequent causes of death and disability following an impact involving the head. By way of illustration, it is estimated that between 50,000 and 75,000 deaths are due to traumatic brain injuries in the United States each year. Among these deaths, about 32% are the result of a road accident involving a motorcyclist.

In an attempt to decrease the number of deaths due to head injuries, it is important to detect the kinematic data of the head in real time during the impact itself.

For this purpose, helmets provided with sensors designed to detect the linear and rotational accelerations of the head have long been known. To date, three types of helmets are known in particular.

The first technology is called the Head Impact Telemetry (HIT) System and comprises six monoaxial accelerometers oriented in a normal direction with respect to the head, which are not mounted on the helmet, but on a body designed to adapt to helmets used for American football. The data is recorded for 40 ms when any of the accelerometers detects an acceleration which exceeds a predefined threshold. With this technology it is possible to detect linear accelerations and reconstruct the rotational accelerations undergone by the head.

The second is 6DOF (Six Degree of Freedom) and uses a device provided with twelve monoaxial accelerometers arranged in pairs placed in six different locations in a fabric padding, to be applied to the helmet. All the accelerometers are in contact with the head and are oriented so that their axes are tangential to the head. The fabric padding acts as an elastomeric cushioning system that regulates the contact pressure and keeps the orientation of the accelerometers relative to the head unchanged during impact.

The third known technology is gForce Tracker (GFT), which comprises a triaxial accelerometer and a triaxial gyroscope in a housing attached to a helmet. This technology allows to detect linear accelerations by means of an empirical method, but not rotational accelerations.

WO2013/155524 discloses an impact detection system comprising a casing provided with accelerometers to evaluate the acceleration of the casing, an absorption system for attenuating the signal read by the accelerometers with respect to the actual acceleration value, and a processor for evaluating whether or not the impact exceeds a predefined threshold. The system also comprises LED lights that illuminate in different colors depending on the severity of the impact detected.

US10338091 discloses a system for detecting a possible concussion in an American football player. The system provides two accelerometers placed on the helmet at a predetermined distance, a processor, a buffer memory, a receiver/transmitter and a battery. The data collected by the accelerometers are transmitted to a base unit that performs the calculations to evaluate the acceleration undergone by the head. In particular, the linear acceleration is obtained with the vector sum of the linear accelerations detected by the two accelerometers, and the rotational acceleration is estimated geometrically starting from the linear accelerations.

US2012191397 discloses a method and a system for monitoring the movement of a rigid body, consisting of the head, comprising a first set of sensors disposed in the helmet and a second set of sensors associated directly with the head. The first set of sensors is used to perform an initial calibration step with low accelerations, while in normal operation, even in the presence of higher accelerations, the movement of the head is monitored directly using the sensors associated with the head itself.

US2007061106 discloses a system for determining the impact of a helmet in the context of monitoring and quantifying the movement of an athlete. The system implements a neural network to determine the speed of an athlete, for example a skier or snowboarder, in the form of a scalar value and not of a vector.

US2015040665 and US2002060633 describe systems comprising a plurality of sensors (accelerometers, gyroscopes) disposed in a helmet to estimate the accelerations and - in the case of US2015040665, which discloses the preamble of claim 1, - also the angular speeds, to which the head is subjected. In US2002060633 the system provides as output a profile, chosen from a plurality of previously stored curves, that best corresponds - based on the data detected by the sensors - to the selected curve.

US2015226621 describes a system and a method to measure the acceleration of the head alternatively either using data detected by sensors directly placed on the head, or data detected by sensors disposed in a helmet worn by the user, which are however corrected based on a sensor worn by the user directly connected to the head, for example configured to be inserted into his ear by means of headphones or similar devices.

Other similar systems are disclosed in US7386401, US7162392, US20140333446, US20120210498, WO2012009676, US9035776 and KR20040099591.

The solutions known in the art can be substantially grouped into two large technology families, one which calculates the accelerations/speeds based on sensors directly associated with the rigid body (i.e., head) of interest, and the other estimates the accelerations/speeds of such a rigid body based on sensors disposed in a wearable protective device, such as a helmet.

A disadvantage of the solutions of the first family is that they are difficult to apply on a large scale because the related systems comprise uncomfortable and complex sensors to wear, in addition to a complex and laborious processing step, which does not allow to obtain results in real time, or in any case in a useful time for the optimal management of an accidental event, such as in the case of a head trauma following a road accident.

A disadvantage of the solutions of the second family is that they provide unreliable estimates since there is always a relative movement between the rigid body under analysis and the protective member of such a body on which the sensors are located. To have better results, corrections or further processing are required, which, also in this case, make it difficult to have the results in real time or in any case in a useful time to manage an accidental event.

A disadvantage of the known technologies is that they are unable to reproduce both the linear and rotational accelerations with an error of less than 10%.

Therefore, there is a need to improve a method to evaluate the accelerations undergone by the head and a device for the implementation thereof which can overcome at least one of the drawbacks of the art.

In particular, an object of the present invention is to evaluate the entire time history of both the linear and rotational accelerations undergone by the head.

Within the scope of this task, another object of the invention is to evaluate both of the aforementioned accelerations in the most complete, rapid and reliable manner, in particular with an error of less than 10%.

Another object of the invention is to evaluate the angular speed of the head.

A further object of the present invention is to provide a method which requires a related device which is simple and quick to install.

Another object of the invention is to provide a protective device wearable on a head that allows the above method to be actuated.

The Applicant has studied, tested and realized the present invention to overcome the drawbacks of the prior art and to obtain these and further objects and advantages.

### SUMMARY OF THE INVENTION

The present invention is expressed and characterized in the independent claims. The dependent claims show other features of the present invention or variants of the main solution idea.

In accordance with the aforementioned objectives, a method to evaluate the accelerations or speeds undergone by the head of a user which overcomes the limits of the prior art and eliminates the defects therein is described below.

The basic idea of the solution set out below is to perform the calculations of the accelerations and/or speeds undergone by the head, modelled like a rigid body, using artificial intelligence.

In accordance with embodiments, a method is provided to evaluate the accelerations undergone by the head comprising a step of providing a protective device suitable to be worn on the user's head and comprising one or more sensors installed on the protective device in a position such as not to be in direct contact with the head, a step of detecting, by means of the aforementioned sensors, a plurality of signals comprising each of the data relating to an acceleration and/or a speed; and a step of analyzing and processing the aforementioned signals so as to determine the time history of the acceleration and/or the angular speed actually undergone by the head. Within the present disclosure, "time history of acceleration and/or angular speed" means recording over time, respectively, the accelerations and angular speeds undergone by the head.

The data analysis and processing step is performed by an analysis device comprising at least one artificial intelligence module configured to perform an initial training step in which input data and corresponding output data are provided in the aforementioned artificial intelligence module, said data being experimental data relating to the acceleration undergone by the protective device during an impact, a collision or an accidental event.

The artificial intelligence module consists of at least one machine learning module.

Even more preferably, the artificial intelligence module consists of a deep learning module.

According to further embodiments, the artificial intelligence module comprises a neural network. Preferably, the artificial intelligence module operates in real time. More preferably, the neural network is of the long short-term memory LSTM type.

The artificial intelligence module outputs the processed data, i.e., relating to the acceleration undergone by the head, expressed in a Cartesian reference system centered in the center of mass of the head. More preferably, the output data are the components along the three axes of the Cartesian reference system of the acceleration undergone by the head. The output data comprises the three linear acceleration components and the three rotational acceleration components.

The output data comprises the time history of the six components of the acceleration undergone by the head and/or the angular speed of the head. The six acceleration components comprise the three linear acceleration components and the three rotational acceleration components, taken along the three axes of a Cartesian reference system.

Advantageously, the data is sent to a first artificial intelligence module and a second artificial intelligence module, separate from the first.

More advantageously, each of the two artificial intelligence modules outputs the linear acceleration and rotational acceleration data, respectively, in a Cartesian reference system. Even more advantageously, the output data from each of the two artificial intelligence modules comprise the time history of the three components of the relative acceleration undergone by the head projected on the three axes of the Cartesian reference system.

According to embodiments, the method provides to detect the signals by means of multiple sensors configured to detect accelerations or speeds or a combination thereof.

According to embodiments, the acceleration data detected by the sensors are filtered before being sent to the artificial intelligence module.

Preferably, the output data of the artificial intelligence module are used to predict any head injury caused by the impact undergone.

More precisely, the data processed at output of the artificial intelligence module are transmitted to an evaluation module configured to evaluate the consequences of the acceleration on the head that has undergone the acceleration.

Preferably, the evaluation module is adapted to compare the processed data with corresponding predefined threshold data, and to emit an emergency signal if the processed data exceeds the threshold data.

More preferably, the emergency signal is transmitted to an emergency module configured to automatically and almost instantaneously alert a competent body.

According to another aspect of the invention, a protective device wearable on a head is provided, comprising an external protective surface able to protect the head, and comprising a plurality of sensors distributed on the protective surface. The protective device also comprises a system for processing the data acquired by the sensors, which in turn comprises, in addition to the aforementioned sensors, at least one data analysis device comprising at least one artificial intelligence module, and able to perform the aforementioned evaluation method.

Preferably, the device comprises an outer shell. More preferably, the sensors are located below the outer shell.

According to another aspect, the present invention is also related to a computer program comprising instructions for implementing the aforementioned method to evaluate the accelerations or speeds acting on a rigid body, consisting of the head of a user.

A further aspect of the present invention relates to the use of a processing system comprising one or more acceleration and/or speed sensors, a possible processing device of the signal detected by the sensors, a signal analysis device and a communication module for transmitting the signal from the sensors to such devices, in which said computer program is implemented to actuate the aforementioned method, in particular to assess the extent of possible brain damage following an accidental event.

### ILLUSTRATION OF THE DRAWINGS

These and other aspects, features and advantages of the present invention will become clear from the following embodiment description, given as a non-limiting example, with reference to the attached drawings in which:
- fig. 1 is a perspective view of a helmet for a first step of the method according to the invention;
- fig. 2 is a block diagram depicting a first part of the method according to an embodiment;
- fig. 3 is a block diagram representing a second part of the method according to the same embodiment.

To facilitate understanding, identical reference numbers have been used, where possible, to identify identical common elements in the figures. It is to be understood that elements and features of an embodiment can be conveniently combined or incorporated into other embodiments without further clarification.

### DESCRIPTION OF SOME EMBODIMENTS OF THE PRESENT INVENTION

Reference will now be made in detail to the possible embodiments of the invention, one or more examples of which are shown in the attached figures by way of non-limiting example. The phraseology and terminology used herein is also for non-limiting exemplary purposes.

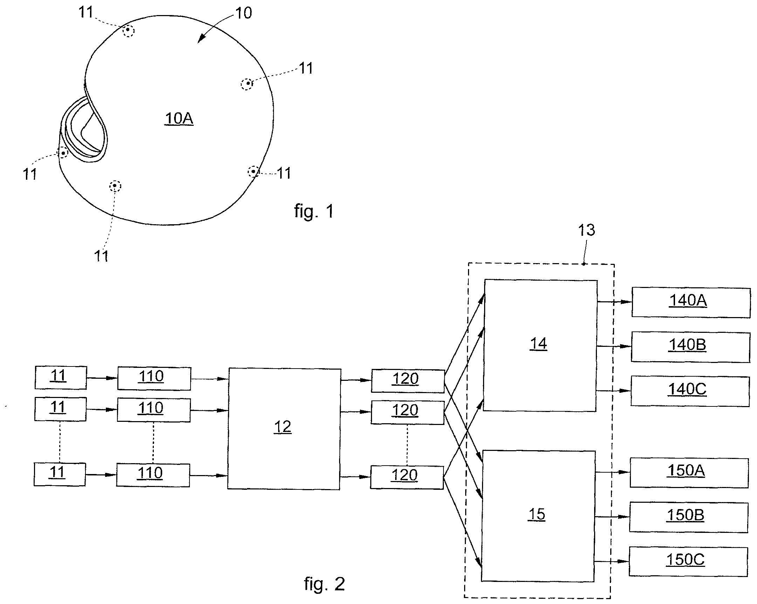

Fig. 1 shows a device, indicated as a whole with the reference number 10, which can be used to implement the method to evaluate the acceleration undergone by the head.

The device 10 is the type of protection to be worn on the head, in particular a helmet. The example of fig. 1 shows a helmet 10 for motorcyclists, but it is obviously possible to provide other types of helmets such as, for example, helmets for cyclists, for American football, for boxing or the like, helmets for military use, protective helmets for the workplace, or even helmets for children.

Regardless, the protective device 10 comprises an outer shell defining an external protective surface 10A.

The helmet 10 is provided with a plurality of sensors 11 able to detect linear accelerations, and to emit corresponding signals 110. Such signals contain the detected acceleration data. It is possible to provide that the sensors 11 are configured to detect, in addition to the linear accelerations, also the rotational accelerations. Alternatively or additionally, the sensors 11 can also be configured to detect speeds.

The protective device 10 comprises at least one sensor 11. According to embodiments the sensors 11 are in a number between three and twenty, for example four, five, six, seven eight, ten, twelve, or fourteen, but can also be more depending on requirements.

Such sensors 11 are disposed in different locations scattered in the external protective surface 10A of the helmet 10 so as to detect accelerations in correspondence with different areas of the head (fig. 1).

Preferably, the sensors 11 are disposed in correspondence with the inner surface of the outer shell of the helmet 10. Thereby the sensors 11 are protected by the outer shell of the helmet 10 and, furthermore, the measurements made are not affected by the manner in which the helmet 10 is worn on the head.

Advantageously, the sensors 11 are accelerometers of known type, and therefore not further described for the sake of simplicity.

Alternatively or in addition to accelerometers, gyroscopes or other sensors capable of detecting angular rotational speed can also be provided.

According to the present invention, a processing system is provided which comprises, in addition to the aforementioned sensors 11, also a signal processing device 12, a signal analysis device 13 and a communication module for transmitting the signal from the sensors 11 to such devices 12, 13. The term signal means the signal 110 emitted by the sensors 11.

According to embodiments, the processing device 12 comprises a filter, e.g., a CFC1000-type filter. The filter 12 takes as input the signals 110 output by the sensors 11 and outputs the processed signals 120, in this case the filtered signals.

The analysis device 13 is adapted to analyze and process the data acquired by the accelerometers 11 so as to evaluate the accelerations, linear and rotational, undergone by the head, and possibly the angular speeds of the latter. In particular, the analysis device 13 takes in input the signal 110 emitted by the sensors 11, or the processed signal 120 output by the processing device 12, if present.

According to an embodiment, in addition or alternatively to the aforementioned accelerometers, the sensors 11 can comprise gyroscopes or other similar sensors suitable to detect the angular speed of the head. Also in this case, the analysis device 13 is able to analyze and process the data acquired by the sensors 11 as a whole (only gyroscopes, or combination of gyroscopes and accelerometers) so as to evaluate the accelerations, linear and rotational, undergone by the head, and the angular speed of the head.

It can be provided that the analysis device 13 is integrated with or is outside the protective device 10. In the latter configuration, the communication module (not shown in the figures) is configured to transmit the signals 110 from the sensors 11 to the analysis device 13.

The analysis device 13 comprises at least one artificial intelligence module 14, 15 able to evaluate, on the basis of the signals emitted by the sensors 11, the linear acceleration and the rotational acceleration undergone by the head. It is obviously provided that such an artificial intelligence module 14, 15, preferably of the neural network type, will be trained before it can properly perform its function.

Preferably, the analysis device 13 comprises two artificial intelligence modules, a first module 14 dedicated to linear acceleration, and a second module 15 dedicated to rotational acceleration (fig. 2).

According to embodiments, the processing system also comprises one or more monitoring and activation elements, which monitor the accelerations detected by the sensors 11 and, when a predefined acceleration threshold or angular speed value are exceeded, activate the processing system, which determines the sending of the signals 110 from the sensors 11 to the processing device 12, if present, or directly to the analysis device 13.

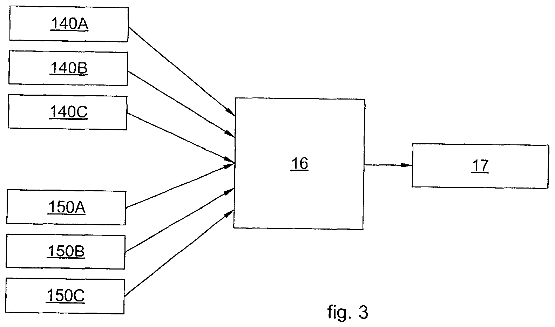

According to embodiments, the system also comprises an evaluation module 16 (fig. 3), preferably comprised in the analysis device 13. The evaluation module 16 receives the data 140A-C, 150A-C output from the artificial intelligence modules 14, 15 and performs the evaluation of the acceleration undergone by the head. Preferably, the evaluation module 16 is configured to output a signal corresponding to an emergency situation, based on the evaluation performed.

For example, an emergency signal can be emitted if the evaluation module 16 detects an acceleration undergone by the head such as to cause traumatic brain injury.

An emergency module 17 can also be provided, connected to the evaluation module 16 (fig. 3) and able to receive an emergency signal and to automatically and instantaneously alert a rescue body so that the injured person can be taken care of as soon as possible. For example, the emergency module 17 comprises a known type module, called an "eCall".

Fig. 2 illustrates a method to evaluate accelerations undergone by the head according to an embodiment, starting from the detection, by the sensors 11, of accelerations undergone by the helmet 10. In other words, in the case where the helmet is provided with seven sensors 11, seven signals 110 will be emitted.

It should be noted that, as with the helmets of the state of the art, the helmet 10 has a relative movement with respect to the head, which determines an acceleration undergone by the helmet 10 that is not equal to the acceleration undergone by the head, which is, on the other hand, the acceleration sought to be evaluated as precisely as possible. In some cases, it has been observed that the acceleration values undergone by the helmet 10 can also differ by very high amounts with respect to the acceleration values undergone by the head.

Each of the sensors 11 acquires its own signal 110, which contains data on the perceived acceleration. In particular, each signal 110 comprises linear data, relating to the linear component of the perceived acceleration. As previously mentioned, it is possible to provide to detect, in addition to or as an alternative to signals relating to linear acceleration, signals relating to rotational acceleration, and/or signals relating to the angular speed of the movement of the helmet 10.

In the diagram of fig. 2, the signals 110 are sent to the processing device 12, in this case a filter, so as to be filtered, for example to make the signal more accurate and free of electronic noise. Each of the signals 110 gives rise to a respective processed signal 120, which is subsequently sent to the analysis device 13.

It is reiterated that the signal processing step is optional, i.e., it is possible to provide that the signals 110 acquired by the sensors 11 are sent directly to the analysis device 13.

The analysis device 13, in the example shown in fig. 2, comprises two artificial intelligence modules 14, 15, as explained above. The first artificial intelligence module 14 is configured to process the linear acceleration data, while the second artificial intelligence module 15 is configured to process the rotational acceleration data. In an alternate, fully equivalent embodiment, the analysis device 13 comprises a single artificial intelligence module suitable to estimate both linear acceleration and rotational acceleration.

The signals 120 are all sent to both of the artificial intelligence modules 14, 15. Each artificial intelligence module 14, 15 then receives a plurality of data, for example seven, in the above example.

It can be seen that the analysis device 13 analyzes and processes the acceleration data perceived not only at one point of the helmet 10, but at a plurality of points of the helmet 10, where the sensors 11 are positioned.

Each of the artificial intelligence modules 14, 15 analyzes the processed data 120 received and processes the data 140A-C, 150A-C relating to the acceleration undergone by the head. In particular, the first module 14 outputs data 140A-C relating to the linear component of the acceleration undergone by the head, and the second module 15 outputs data 150A-C relating to the rotational component of the acceleration undergone by the head.

By virtue of the artificial intelligence modules 14, 15, preferably comprising neural networks, more preferably of the long short-term memory type, the data relating to the acceleration actually undergone by the head are processed in real time, during or immediately after the impact suffered.

According to embodiments, the data 140A-C, 150A-C are expressed in a Cartesian reference system, typically provided with three axes x, y, z. According to embodiments, the Cartesian reference system is centered in the center of mass of the head. However, it is possible to center the Cartesian reference system in other points, if necessary, this aspect being adjusted during the initial training step.

In particular, the first module provides the data 140A relating to the linear component of the acceleration along the x-axis, the data 140B relating to the linear component along the y-axis and the data 140C relating to the linear component along the z-axis.

Similarly, the second module provides the data 150A relating to the rotational component of the acceleration along the x-axis of the Cartesian reference system, the data 150B relating to the rotational component along the y-axis, and the data 150C relating to the rotational component along the z-axis.

Advantageously, the data 140A-C, 150A-C processed by the analysis device 13 are sent to the evaluation module 16 (fig. 3) which evaluates the acceleration actually undergone by the head, and possibly assesses its severity. For example, the evaluation module 16 can be configured to compare the components of the actual acceleration with corresponding thresholds beyond which a negative consequence on the health of the impacted person occurs, e.g., traumatic brain injury.

If one or more of the processed components exceed the corresponding threshold, the evaluation module 16 emits an emergency signal.

Preferably, the emergency signal is forwarded to the emergency module, which alerts a competent body (e.g., a switchboard) automatically and instantaneously.

Obviously, the results obtained by the method described above are optimal when the artificial intelligence modules have been trained.

The training step provides to input, in the artificial intelligence modules 14, 15, known input data and also the known corresponding output data.

In particular, the known input data can be acceleration data previously recorded on a helmet, during a simulated impact or during an impact in a real situation, such as during a sports session or a road accident.

The output data may have been processed by means of numerical simulation, e.g., by means of finite element analysis, of the known input data.

Thereby, the artificial intelligence modules 14, 15 are set to associate, with certain input data, certain corresponding output data.

It should be noted that a training step was conducted with a set of about 400 input data and as many output data, corresponding to impacts on different points of a helmet, scattered on the external surface thereof.

Subsequently, system tests were performed, with artificial intelligence modules 14, 15 trained with about 70 known input data. The artificial intelligence modules analyzed the known input data and processed the corresponding output data. Such processed output data were compared with the known output data corresponding to the known input data.

The comparison showed that the output data processed by the artificial intelligence modules show excellent correspondence with the known output data.

It was therefore verified that the method as described above, based on artificial intelligence, achieves the aim of reliably evaluating the linear and rotational accelerations undergone by a head during an impact. In fact, the method led to an error of less than 10 % for most tests for both linear and rotational acceleration.

Thereby, the method allows to give an immediate and reliable evaluation of the damage caused by the impact, and for example to warn the appropriate bodies to treat the person who has suffered the impact, if necessary.

Another advantage of the method is the stability thereof from a mathematical point of view, which allows to obtain results that present negligible differences even if the sensors are arranged on the helmet in positions not exactly identical to those provided, by virtue of an evaluation performed with artificial intelligence.

A further advantage of the method, deriving from its mathematical stability, is that it can be applied to any type of helmet, regardless of its shape, its size and the shape of its external protective surface. In this regard, it should be noted that, although only a motorcycle helmet is shown in the present application, the protective device 10 can be a helmet of any type, for example for cyclists, for boxing, for any sport involving a certain speed or impact on the head, or helmets for military applications, construction helmets, or even helmets for children.

It is clear that modifications and/or additions of parts or steps can be made to the method to evaluate the acceleration undergone by a head described so far, without departing from the scope of the present invention as defined by the claims.

In the following claims, the references in parentheses have the sole purpose of facilitating reading and must not be considered as limiting factors as regards the scope of protection underlying the specific claims.

## Claims

1. Method to evaluate the accelerations or speeds acting on the head of a user, comprising:
- a step of providing a protective device (10) suitable to be worn on the user's head and comprising a plurality of sensors (11) installed on the protective device (10) in a position such that they are not in direct contact with the head,
- a step of detecting, by means of said plurality of sensors (11), a plurality of signals (110) each comprising data relating to an acceleration and/or speeds,
- a step of analyzing and processing said signals (110), so as to determine the time history of the acceleration and/or speed the head has undergone,
said method being **characterized in that** said analysis and data processing step is performed by an analysis device (13) comprising at least one artificial intelligence module (14, 15), consisting of at least one machine learning module, and configured to perform an initial training step in which it is provided to input into said at least one artificial intelligence module (14, 15) input data and corresponding output data, said data being data relating to the acceleration undergone by said protective device (10) during an impact, a collision or an accidental event, wherein said at least one artificial intelligence module (14, 15) supplies the processed data (140A-C, 150A-C) expressed in a Cartesian reference system centered in the center of mass of the head and wherein the processed data (140A-C, 150A-C) comprise the time history of the six components of the acceleration undergone by the head, projected on the three axes of the Cartesian reference system.

2. Method as in claim 1, **characterized in that** said at least one artificial intelligence module (14, 15) consists of a deep learning module.

3. Method as in claim 2, **characterized in that** said at least one artificial intelligence module (14, 15) comprises a neural network.

4. Method as in claim 3, **characterized in that** the neural network is of the long short-term memory LSTM type.

5. Method as in any claim hereinbefore, **characterized in that** said analysis device (13) comprises two artificial intelligence modules (14, 15), wherein a first artificial intelligence module (14) is configured to output data (140A-C) related to the linear acceleration, and a second artificial intelligence module (15) is configured to output data (150A-C) related to the rotational acceleration.

6. Method according to any one of the preceding claims, **characterized in that** the data processed at output of the artificial intelligence module (14, 15) are transmitted to an evaluation module (16) configured to evaluate the consequences on the head that has undergone acceleration.

7. Method as in claim 6, **characterized in that** the evaluation module is able to compare the processed data (140A-C, 150A-C) with corresponding threshold data, and to emit an emergency signal if said threshold data is exceeded.

8. Method as in any claim hereinbefore, **characterized in that** it is provided to monitor the signals (110) detected by said sensors (11) by means of one or more monitoring and activation elements, configured to activate a step of transmitting the signals (110) from said sensors (11) to said analysis device (13) when said signals (110) exceed a predetermined threshold value.

9. Method as in any claim hereinbefore, **characterized in that** the data detected by said sensors (11) are transmitted to a processing device (12) before being transmitted to said analysis device (13), so as to be filtered.

10. Protective device wearable on a head, comprising an external protective surface (10A), and a plurality of sensors (11) distributed in said external protective surface, in a position such that they are not in direct contact with the head, **characterized in that** it also comprises a system for processing the data acquired by said sensors (11) comprising, in addition to said sensors (11), at least one data analysis device (13) comprising at least one artificial intelligence module (14, 15), and able to perform the method as in any claim hereinbefore.

11. Computer program comprising instructions for implementing a method for evaluating the accelerations or speeds acting on a rigid body, consisting of the head of a user, said program instructions comprising the steps of the method as in any of claims 1 to 9.

12. Use of a processing system comprising one or more acceleration and/or speed sensors (11), in a protective device according to claim 10, a processing device (12) of the signal detected by said sensors (11), a device for analyzing (13) said signal and a communication module for transmitting the signal from said sensors (11) to said devices (12, 13), wherein a computer program as in claim 11 is implemented to actuate a method as in any of claims 1 to 9, being **characterized in that** it is provided to use said method to evaluate the accelerations and/or speeds acting on a user's head, in particular to evaluate the extent of possible brain damage following an accidental event.

## Patentansprüche

1. Verfahren zum Bewerten der Beschleunigungen oder Geschwindigkeiten, die auf den Kopf eines Benutzers einwirken, mit
- einem Schritt eines Bereitstellens einer Schutzeinrichtung (10), die geeignet ist, am Benutzerkopf getragen zu werden, und die eine Vielzahl von Sensoren (11) umfasst, die an der Schutzeinrichtung (10) an einer Position installiert sind, sodass sie nicht in direktem Kontakt mit dem Kopf sind,
- einem Schritt eines Erfassens einer Vielzahl von Signalen (110) mittels der Vielzahl von Sensoren (11), die j eweils Daten umfassen, die sich auf eine Beschleunigung und/oder Geschwindigkeiten beziehen,
- einem Schritt eines Analysierens und Verarbeitens der Signale (110), um den Zeitverlauf der Beschleunigung und/oder Geschwindigkeit zu bestimmen, der der Kopf ausgesetzt war,
wobei das Verfahren **dadurch gekennzeichnet ist, dass** der Analyse- und Datenverarbeitungsschritt durch eine Analyseeinrichtung (13) durchgeführt wird, die zumindest ein künstliches Intelligenzmodul (14, 15) umfasst, das aus zumindest einem maschinellen Lernmodul besteht und zur Durchführung eines Anfangstrainingsschritts eingerichtet ist, in dem es zur Eingabe von Eingabedaten und entsprechenden Ausgabedaten in das zumindest eine künstliche Intelligenzmodul (14, 15) bereitgestellt ist, wobei die Daten Daten sind, die sich auf die Beschleunigung beziehen, der die Schutzeinrichtung (10) während eines Aufpralls, einer Kollision oder eines Unfallereignisses ausgesetzt war, wobei das zumindest eine künstliche Intelligenzmodul (14, 15) die verarbeiteten Daten (140A-C, 150A-C) zuführt, die in einem kartesischen Bezugssystem ausgedrückt sind, das am Schwerpunkt des Kopfes zentriert ist, und wobei die verarbeiteten Daten (140A-C, 150A-C) den Zeitverlauf der sechs Komponenten der Beschleunigung, der der Kopf ausgesetzt war, projiziert auf die drei Achsen des kartesischen Bezugssystems umfassen.

2. Verfahren nach Anspruch 1, **dadurch gekennzeichnet, dass** das zumindest eine künstliche Intelligenzmodul (14, 15) aus einem Tiefenlernmodul besteht.

3. Verfahren nach Anspruch 2, **dadurch gekennzeichnet, dass** das zumindest eine künstliche Intelligenzmodul (14, 15) ein neuronales Netzwerk umfasst.

4. Verfahren nach Anspruch 3, **dadurch gekennzeichnet, dass** das neuronale Netzwerk vom Langes-Kurzzeitgedächtnis, LSTM, -Typ ist.

5. Verfahren nach einem der vorhergehenden Ansprüche, **dadurch gekennzeichnet, dass** die Analyseeinrichtung (13) zwei künstliche Intelligenzmodule (14, 15) umfasst, wobei ein erstes künstliches Intelligenzmodul (14) zur Ausgabe von Daten (140A-C) eingerichtet ist, die sich auf die lineare Beschleunigung beziehen, und ein zweites künstliches Intelligenzmodul (15) zur Ausgabe von Daten (150A-C) eingerichtet ist, die sich auf die Rotationsbeschleunigung beziehen.

6. Verfahren nach einem der vorhergehenden Ansprüche, **dadurch gekennzeichnet, dass** die am Ausgang des künstlichen Intelligenzmoduls (14, 15) verarbeiteten Daten zu einem Bewertungsmodul (16) übertragen werden, das zur Bewertung der Konsequenzen für den Kopf, der die Beschleunigung erfahren hat, eingerichtet ist.

7. Verfahren nach Anspruch 6, **dadurch gekennzeichnet, dass** das Bewertungsmodul zum Vergleichen der verarbeiteten Daten (140A-C, 150A-C) mit entsprechenden Schwellenwertdaten und zum Emittieren eines Notsignals, wenn die Schwellenwertdaten überschritten werden, eingerichtet ist.

8. Verfahren nach einem der vorhergehenden Ansprüche, **dadurch gekennzeichnet, dass** es zum Beobachten der durch die Sensoren (11) erfassten Signale (110) mittels eines oder mehrerer Überwachungs- und Aktivierungselementen bereitgestellt ist, die zum Aktivieren eines Schritts eines Übertragens der Signale (110) von den Sensoren (11) zu der Analyseeinrichtung (13), wenn die Signale (110) einen vorbestimmten Schwellenwert überschreiten, eingerichtet sind.

9. Verfahren nach einem der vorhergehenden Ansprüche, **dadurch gekennzeichnet, dass** die durch die Sensoren (11) erfassten Daten zu einer Verarbeitungseinrichtung (12) übertragen werden, bevor sie zu der Analyseeinrichtung (13) übertragen werden, um so gefiltert zu werden.

10. Schutzeinrichtung, die an einem Kopf tragbar ist, mit einer externen Schutzfläche (10A) und einer Vielzahl von Sensoren (11), die auf der externen Schutzfläche verteilt sind, an einer Position, sodass sie mit dem Kopf nicht in direktem Kontakt sind,
**dadurch gekennzeichnet, dass** sie auch ein System zum Verarbeiten der durch die Sensoren (11) beschafften Daten umfasst, das zusätzlich zu den Sensoren (11) zumindest eine Datenanalyseeinrichtung (13) mit zumindest einem künstlichen Intelligenzmodul (14, 15) umfasst, die zur Durchführung des Verfahrens nach einem der vorhergehenden Ansprüche fähig ist.

11. Computerprogramm mit Instruktionen zum Implementieren eines Verfahrens zum Bewerten der Beschleunigungen oder Geschwindigkeiten, die auf einen Festkörper einwirken, der aus dem Kopf eines Benutzers besteht, wobei die Programminstruktionen die Schritte des Verfahrens nach einem der Ansprüche 1 bis 9 umfassen.

12. Verwendung eines Verarbeitungssystems mit einem oder mehreren Beschleunigungs- und/oder Geschwindigkeitssensoren (11) in einer Schutzeinrichtung nach Anspruch 10, einer Verarbeitungseinrichtung (12) des durch die Sensoren (11) erfassten Signals, einer Einrichtung zum Analysieren (13) des Signals und einem Kommunikationsmodul zum Übertragen des Signals von den Sensoren (11) zu den Einrichtungen (12, 13), wobei ein Computerprogramm nach Anspruch 11 zum Betätigen eines Verfahrens nach einem der Ansprüche 1 bis 9 implementiert ist, **dadurch gekennzeichnet, dass** es zur Verwendung des Verfahrens zum Bewerten der Beschleunigungen und/oder Geschwindigkeiten, die auf einen Benutzerkopf einwirken, insbesondere zum Bewerten des Ausmaßes einer möglichen Hirnschädigung infolge eines Unfallereignisses vorgesehen ist.

## Revendications

1. Procédé pour évaluer les accélérations ou les vitesses agissant sur la tête d'un utilisateur, comprenant :
- une étape de fourniture d'un dispositif de protection (10) adapté pour être porté sur la tête de l'utilisateur et comprenant une pluralité de capteurs (11) installés sur le dispositif de protection (10) dans une position telle qu'ils ne sont pas en contact direct avec la tête,
- une étape de détection, par l'intermédiaire de ladite pluralité de capteurs (11), d'une pluralité de signaux (110) comprenant chacun des données relatives à une accélération et/ou à des vitesses,
- une étape d'analyse et de traitement desdits signaux (110), de manière à déterminer l'historique temporel de l'accélération et/ou de la vitesse que la tête a subie,
ledit procédé étant **caractérisé en ce que** ladite étape d'analyse et de traitement de données est mise en oeuvre par un dispositif d'analyse (13) comprenant au moins un module d'intelligence artificielle (14, 15), constitué d'au moins un module d'apprentissage automatique, et configuré pour mettre en oeuvre une étape de formation initiale dans laquelle il est prévu d'entrer dans ledit au moins un module d'intelligence artificielle (14, 15) des données d'entrée et des données de sortie correspondantes, lesdites données étant des données relatives à l'accélération subie par ledit dispositif de protection (10) lors d'un impact, d'une collision ou d'un événement accidentel, dans lequel ledit au moins un module d'intelligence artificielle (14, 15) fournit les données traitées (140A-C, 150A-C) exprimées dans un système de référence cartésien centré dans le centre de masse de la tête et dans lequel les données traitées (140A-C, 150A-C) comprennent l'historique temporel des six composantes de l'accélération subie par la tête, projetées sur les trois axes du système de référence cartésien.

2. Procédé selon la revendication 1, **caractérisé en ce que** ledit au moins un module d'intelligence artificielle (14, 15) consiste en un module d'apprentissage profond.

3. Procédé selon la revendication 2, **caractérisé en ce que** ledit au moins un module d'intelligence artificielle (14, 15) comprend un réseau neuronal.

4. Procédé selon la revendication 3, **caractérisé en ce que** le réseau neuronal est du type LSTM à mémoire à long et court terme.

5. Procédé selon l'une quelconque des revendications précédentes, **caractérisé en ce que** ledit dispositif d'analyse (13) comprend deux modules d'intelligence artificielle (14, 15), dans lequel un premier module d'intelligence artificielle (14) est configuré pour délivrer en sortie des données (140A-C) relatives à l'accélération linéaire, et un second module d'intelligence artificielle (15) est configuré pour délivrer en sortie des données (150A-C) relatives à l'accélération rotative.

6. Procédé selon l'une quelconque des revendications précédentes, **caractérisé en ce que** les données traitées en sortie du module d'intelligence artificielle (14, 15) sont transmises à un module d'évaluation (16) configuré pour évaluer les conséquences sur la tête qui a subi une accélération.

7. Procédé selon la revendication 6, **caractérisé en ce que** le module d'évaluation est capable de comparer les données traitées (140A-C, 150A-C) avec des données de seuil correspondantes, et d'émettre un signal d'urgence si lesdites données de seuil sont dépassées.

8. Procédé selon l'une quelconque des revendications précédentes, **caractérisé en ce qu'**il est prévu de surveiller les signaux (110) détectés par lesdits capteurs (11) par l'intermédiaire d'un ou plusieurs éléments de surveillance et d'activation, configurés pour activer une étape de transmission des signaux (110) depuis lesdits capteurs (11) vers ledit dispositif d'analyse (13) lorsque lesdits signaux (110) dépassent une valeur de seuil prédéterminée.

9. Procédé selon l'une quelconque des revendications précédentes, **caractérisé en ce que** les données détectées par lesdits capteurs (11) sont transmises à un dispositif de traitement (12) avant d'être transmises audit dispositif d'analyse (13), de manière à être filtrées.

10. Dispositif de protection pouvant être porté sur une tête, comprenant une surface de protection externe (10A), et une pluralité de capteurs (11) répartis dans ladite surface de protection externe, dans une position telle qu'ils ne sont pas en contact direct avec la tête,
**caractérisé en ce qu'**il comprend également un système de traitement des données acquises par lesdits capteurs (11) comprenant, en plus desdits capteurs (11), au moins un dispositif d'analyse de données (13) comprenant au moins un module d'intelligence artificielle (14, 15), et capable de mettre en oeuvre le procédé selon l'une quelconque des revendications précédentes.

11. Programme informatique comprenant des instructions pour exécuter un procédé pour évaluer les accélérations ou les vitesses agissant sur un corps rigide, constitué de la tête d'un utilisateur, lesdites instructions de programme comprenant les étapes du procédé selon l'une quelconque des revendications 1 à 9.

12. Utilisation d'un système de traitement comprenant un ou plusieurs capteurs d'accélération et/ou de vitesse (11), dans un dispositif de protection selon la revendication 10,
un dispositif de traitement (12) du signal détecté par lesdits capteurs (11), un dispositif d'analyse (13) dudit signal et un module de communication pour transmettre le signal desdits capteurs (11) auxdits dispositifs (12, 13), dans lequel un programme informatique selon la revendication 11 est exécuté pour actionner un procédé selon l'une quelconque des revendications 1 à 9, **caractérisé en ce qu'**il est prévu d'utiliser ledit procédé pour évaluer les accélérations et/ou les vitesses agissant sur la tête d'un utilisateur, en particulier pour évaluer l'étendue des dommages cérébraux possibles suite à un événement accidentel.
